# EUROPÄISCHE PATENTANMELDUNG

(11) **EP 4 663 524 A1**
(43) Veröffentlichungstag der Anmeldung: **17.12.2025**
(21) Anmeldenummer: 25174261.5
(22) Anmeldetag: 05.05.2025
(51) Int. Cl.: B62J 6/054, B62J 6/056

(54) **FAHRTRICHTUNGSANZEIGEEINRICHTUNG FÜR FAHRRÄDER**

(30) Priorität: 14.06.2024 DE 102024116826
(71) Anmelder: Busch & Müller KG, 58540 Meinerzhagen (DE)
(72) Erfinder: Müller, Rainer, 58540 Meinerzhagen (DE)
(74) Vertreter: Patentanwälte Dörner & Kötter PartG mbB

(57) **Zusammenfassung**

Die Erfindung betrifft eine Fahrtrichtungsanzeigeeinrichtung für Fahrräder in Form eines Lenkerendenblinkers umfassend ein Gehäuse (1), eine Leuchteinheit (3), eine Bedieneinheit (8) und eine Steuereinheit (7). Die Bedieneinheit (8) ist dabei von Mitteln (9) zum Betätigen gebildet, welche außen am Gehäuse (1) angeordnet sind.

## Beschreibung

Die Erfindung betrifft eine Fahrtrichtungsanzeigeeinrichtung für Fahrräder in Form eines Lenkerendenblinkers umfassend ein Gehäuse, eine Leuchteinheit, eine Bedieneinheit und eine Steuereinheit.

Beim Fahrradfahren erfolgt das Anzeigen einer Fahrtrichtungsänderung bspw. zum Abbiegen oder zum Wechseln der Fahrspur üblicherweise durch Ausstrecken des Arms in die Richtung, in die die Fahrtrichtung geändert werden soll. Hierzu muss der Radfahrer eine Hand von Lenker nehmen.

Grundsätzlich stellt diese Vorgehensweise für geübte Radfahrer kein Problem dar. Allerdings ist das Handzeichen des Radfahrers bei Dunkelheit oder schlechten Sichtverhältnissen für andere Verkehrsteilnehmer schlecht zu erkennen. Hinzu kommt, dass mit nur einer Hand am Lenker die Fahrstabilität negativ beeinflusst ist, bspw. beim Bremsen des Fahrrads mit nur einer Hand am Lenker. Und auch bei Lastenfahrrädern ist bei voller Beladung das Abbiegen mit nur einer Hand unfallträchtig. Das gilt genauso bei schweren E-Bikes oder Pedelecs (Pedal Electric Cycles).

Zur Vermeidung dieser Probleme ist es bekannt, Fahrtrichtungsanzeiger an Fahrrädern, E-Bikes, Pedelecs aber auch E-Scootern (nachfolgend gemeinschaftlich als "Fahrräder" bezeichnet) anzubringen. Die Fahrtrichtungsanzeiger müssen nach dem Einschalten mit einer vorgegebenen Frequenz zwischen hell und dunkel blinken. Sie müssen so angebracht und beschaffen sein, dass die Anzeige der beabsichtigten Fahrtrichtungsänderung unter allen Beleuchtungs- und Betriebsverhältnissen von anderen Verkehrsteilnehmern, für die ihre Erkennbarkeit von Bedeutung ist, deutlich wahrgenommen werden kann.

Fahrtrichtungsanzeigeeinrichtungen an Fahrrädern sind an sich bekannt. Sie bestehen aus mindestens einer Betätigungseinheit, welche am Lenker angebracht ist, sowie Blinkelementen, deren Leuchtelemente links und rechts der Längsmittellinie des Fahrrads angebracht sind. Die Betätigungseinheiten sind üblicherweise mit einem Taster oder Schieber versehen.

Bei den Fahrtrichtungsanzeigeeinrichtungen der hier betrachteten Art befinden sich die das Blinksignal ausstrahlenden Leuchtelemente an den Enden der Lenker. Diese Art der Fahrtrichtungsanzeigeeinrichtungen wird auch als "Lenkerendenblinker" oder "Ochsenaugen" bezeichnet.

Die bekannten Fahrtrichtungsanzeigeeinrichtungen in Form von Lenkerendenblinkern erfüllen die an sie gestellten Anforderungen. Allerdings sind die Betätigungseinheiten in der Regel nicht zu bedienen, ohne die Hand vom Lenkergriff zu nehmen. Dies findet seine Ursache darin, dass die bekannten Betätigungseinheiten auf der den Lenkerenden abgewandten (Innen-)Seite der Griffe platziert sind. Insbesondere in Fällen, in denen die Fahrtrichtungsanzeigeeinrichtungen nachgerüstet werden, ist aufgrund anderer Bedienelemente, bspw. für die Bremse, Gangschaltung usw., eine unmittelbar zum Griff benachbarte Anordnung der Bedienelemente verhindert. Dadurch ist der Bedienkomfort zusätzlich reduziert.

Hier will die Erfindung Abhilfe schaffen. Der Erfindung liegt die Aufgabe zugrunde eine Fahrtrichtungsanzeigeeinrichtung für Fahrräder in Form eines Lenkerendenblinkers zu schaffen, bei der die Bedienung möglich ist, ohne die Hand vom Lenkergriff nehmen zu müssen und gleichzeitig eine zuverlässige Bedienung gewährleistet ist. Gemäß der Erfindung wird diese Aufgabe mit den Merkmalen des Patentanspruchs 1 gelöst.

Mit der Erfindung eine Fahrtrichtungsanzeigeeinrichtung für Fahrräder in Form eines Lenkerendenblinkers geschaffen, bei der die Bedienung möglich ist, ohne die Hand vom Lenkergriff nehmen zu müssen und gleichzeitig eine zuverlässige Bedienung gewährleistet ist. Durch die außen am Gehäuse angebrachten Mittel zum Betätigen entfällt zudem die getrennte Montage der Bedieneinheit.

Bevorzugt sind die Mittel zum Betätigen von einem Ring gebildet, der das Gehäuse umgibt. Diese Gestaltung weist den Vorteil auf, dass eine Betätigung der Fahrtrichtungsanzeigeeinrichtung nicht allein an einer Stelle, sondern an beliebiger Stelle ringsum das Gehäuse erfolgen kann.

In alternativer Ausgestaltung der Erfindung können die Mittel zum Betätigen von mindestens einem Ringsegment gebildet sein, welches das Gehäuse mindestens bereichsweise umgibt.

In Weiterbildung der Erfindung sind die Mittel zum Betätigen auf dem Gehäuse schwimmend gelagert. Hierdurch kann ein Auslösen der Fahrtrichtungsanzeigeeinrichtung in axialer Richtung des Fahrradlenkers erfolgen.

Vorteilhaft korrespondieren die Mittel zum Betätigen mit mindestens einem Sensor, wodurch ein zuverlässiges Auslösen und Abstellen der Fahrtrichtungsanzeigeeinrichtung ermöglicht ist.

In anderer Weiterbildung der Erfindung wirken die Mittel zum Betätigen mit mindestens einem Rückstellelement zusammen. Hierdurch ist der Bedienkomfort der Fahrtrichtungsanzeigeeinrichtung erhöht, da der Benutzer unabhängig vom jeweiligen Betriebszustand die Mittel immer in derselben Position vorfindet, wodurch die Gefahr von Fehlbedienungen reduziert ist.

In anderer Ausgestaltung der Erfindung ist in dem Gehäuse mindestens ein Ackumulator angeordnet. Hierdurch ist die Versorgung mit elektrischer Energie für die Funktion der Fahrtrichtungsanzeigeeinrichtung gewährleistet, so dass die erfindungsgemäße Fahrtrichtungsanzeigeeinrichtung nicht mit dem Akkumulator eines mit einem elektrisch angetriebenen Hilfsmotor versehen Fahrrads angeschlossen werden muss. Außerdem ist die erfindungsgemäße Fahrtrichtungsanzeigeeinrichtung damit auch an Fahrrädern einsetzbar ist, die über keinen elektrisch angetriebenen Hilfsmotor und damit über keine Energieversorgung verfügen.

In dem Gehäuse kann mindestens ein Funkmodul angeordnet sein. Mit Hilfe des Funkmoduls kann die erfindungsgemäße Fahrtrichtungsanzeigeeinrichtung mit anderen Aggregaten am Fahrrad kommunizieren, bspw. mit anderen Fahrtrichtungsanzeigeeinrichtungen.

Äußerst bevorzugt ist in dem Gehäuse mindestens ein Indikator angeordnet. Der Indikator macht bspw. Fehlermeldungen für den Nutzer sichtbar.

Die Steuereinheit kann mit einer Anlernfunktion versehen sein. Hierdurch ist es möglich, andere Fahrtrichtungsanzeigeeinrichtungen in die Steuerung mit einzubinden, bspw. wenn an beiden Enden des Fahrradlenkers voneinander getrennt Fahrtrichtungsanzeigeeinrichtungen angeordnet sind. So kann bspw. Ein synchrones Blinken beider Fahrtrichtungsanzeigeeinrichtungen erzielt werden, um bspw. eine Warnblinkfunktion bereit zu stellen.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer erfindungsgemäßen Fahrtrichtungsanzeigeeinrichtung in an einen Lenker angebautem Zustand;
- Figur 2: die schematische Darstellung einer erfindungsgemäßen Fahrtrichtungsanzeigeeinrichtung in an den Lenker angebautem Zustand in anderer Ausbildung;
- Figur 3: die schematische Darstellung einer Bedieneinheit;
- Figur 4: die schematische Darstellung einer Bedieneinheit in anderer Ausbildung;
- Figur 5: die schematische Darstellung einer Bedieneinheit in einer weiteren Ausbildung;
- Figur 6: die schematische Darstellung einer Bedieneinheit in einer zusätzlichen Ausbildung;
- Figur 7: die schematische Darstellung einer abgewandelten Bedieneinheit;
- Figur 8: die schematische Darstellung der in Figur 7 dargestellten Bedieneinheit in Funktionsstellung.

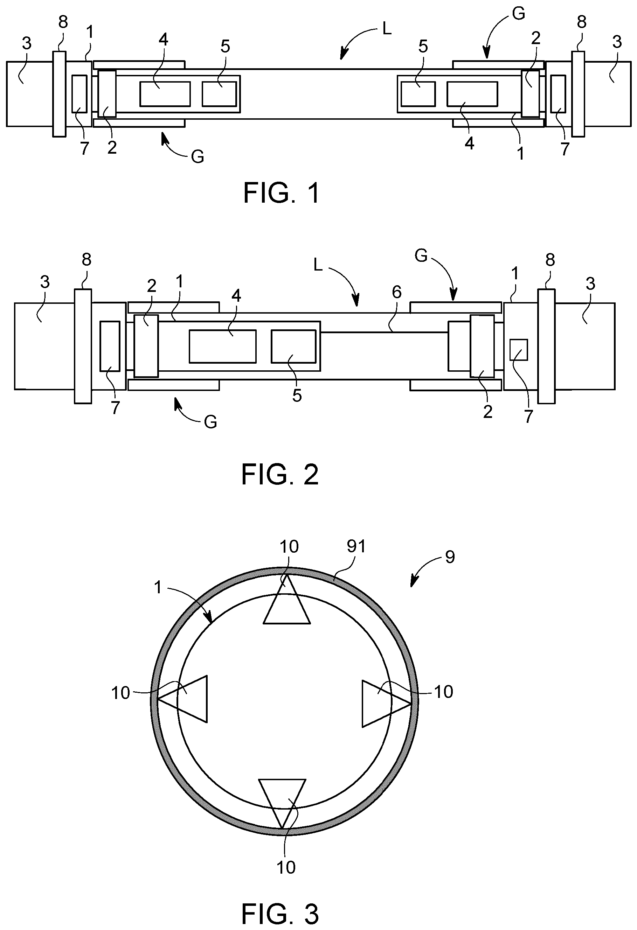

Die als Ausführungsbeispiel gewählte Fahrtrichtungsanzeigeeinrichtung für Fahrräder ist in Form eines Lenkerendenblinkers ausgeführt. Sie ist in den Figu-ren 1 und 2 in an einer Lenkstange L verbautem Zustand dargestellt. Die Lenkstange L ist rohrförmig ausgeführt und weist zwei Griffe G auf, die jeweils die Lenkstange L umschließen. Erkennbar sind in dem Ausführungsbeispiel nach Figur 1 zwei unabhängig voneinander agierende Fahrtrichtungsanzeigeeinrichtungen verbaut. Im Ausführungsbeispiel nach Figur 2 sind die beiden Fahrtrichtungsanzeigeeinrichtungen miteinander verbunden.

Die erfindungsgemäßen Fahrtrichtungsanzeigeeinrichtungen umfassen ein Gehäuse 1, welches bereichsweise in die rohrförmige Lenkstange L ragt. Zum zuverlässigen Halt der Fahrtrichtungsanzeigeeinrichtungen ist jedes Gehäuse 1 in seinem in der Lenkstange L befindlichen Bereich mit einem Klemmelement 2 versehen. In Abwandlung des Ausführungsbeispiels können auch mehrere Klemmelemente 2 an einem Gehäuse 1 vorgesehen sein.

In dem der Lenkstange L abgewandten Ende des Gehäuses 1 und damit außerhalb der Lenkstange L ist eine Leuchteinheit 3 angeordnet. Das Gehäuse 1 ist in diesem Bereich durchsichtig oder zumindest transluzent ausgeführt. Die Leuchteinheit 3 ist vorzugsweise von einer oder mehreren LEDs (light-emitting diodes) gebildet.

In dem Gehäuse 1 ist darüber hinaus ein Akkumulator 4 angeordnet, mit dessen Hilfe die Leuchteinheit 3 mit elektrischer Energie versorgt wird. Bei dem Akkumulator handelt es sich im Ausführungsbeispiel um einen wieder aufladbaren Akkumulator. Aus diesem Grund ist in dem Gehäuse 1 an dem der Leuchteinheit 3 abgewandten Ende eine Ladebuchse 5 angeordnet, mit deren Hilfe ein Anschluss an ein Ladegerät möglich ist. In Abwandlung des Ausführungsbeispiels besteht selbstverständlich auch die Möglichkeit, nicht wieder aufladbare Batterien anstelle von Akkumulatoren zu verwenden.

Im Ausführungsbeispiel nach Figur 2 weist dagegen nur eine der beiden Fahrtrichtungsanzeigeeinrichtungen einen Akkumulator 4 sowie eine Ladebuchse 5 auf. In dieser Ausführung sind die beiden Fahrtrichtungsanzeigeeinrichtungen mit Hilfe eines Verbindungskabels 6 miteinander elektrisch verbunden. Im Falle eines niedrigen Ladezustands ist es bei dieser Ausführung allein erforderlich, die mit dem Akkumulator 4 versehene Fahrtrichtungsanzeigeeinrichtung aus dem Lenker L auszubauen und an eine Ladestation anzuschließen, nachdem die elektrische Verbindung der beiden Fahrtrichtungsanzeigeeinrichtungen unterbrochen wurde. Hierzu ist das Verbindungskabel 6 an mindestens einem seiner beiden Enden mit einem nicht dargestellten Stecker versehen, der das Lösen und Wiederherstellen der Verbindung problemlos möglich macht. In Abwandlung der Ausführungsbeispiele ist es auch möglich, die Ladebuchse 5 außerhalb des Lenkers L anzuordnen. Dadurch ist ein Anschluss an ein Ladekabel und somit an eine Ladestation im eingebauten Zustand des Akkumulators 4 möglich.

Im Gehäuse 1 ist des Weiteren eine Steuereinheit 7 angeordnet. Die Steuereinheit 7 übernimmt unter anderem die Überwachung der Funktion der Fahrtrichtungsanzeigeeinrichtung. So überwacht die Steuereinheit 7 den Ladezustand des Akkumulators 4. Bei Unterschreiten eines vorgegebenen Ladezustands kann dann die Steuereinheit 7 eine Meldung absetzen, die den Nutzer informiert. Hierzu kann an der Fahrtrichtungsanzeigeeinrichtung ein Indikator vorgesehen sein, der bspw. von einer oder mehreren LEDs gebildet ist. Auch eine akustische Warnung ist möglich.

Die Steuereinheit 7 ist zudem im Ausführungsbeispiel mit einem Funkmodul versehen, bspw. mittels Bluetooth. Das Funkmodul dient der Kommunikation mit anderen Fahrtrichtungsanzeigeeinrichtungen, bspw. um eine Warnblinkfunktion zu ermöglichen, bei der alle an einem Fahrrad verbauten Fahrtrichtungsanzeigeeinrichtungen synchron aufblinken müssen. Das Funkmodul ermöglicht außerdem eine Kommunikation der Fahrtrichtungsanzeigeeinrichtung mit einem Smartphone, über welches unter anderem Konfigurationen der Fahrtrichtungsanzeigeeinrichtung eingestellt werden können. Auch die Bedienung bzw. Einstellung der Fahrtrichtungsanzeigeeinrichtung mit Hilfe eines separaten Funktasters ist aufgrund des Funkmoduls möglich.

Darüber hinaus ist die Steuereinheit 7 mit einer Anlernfunktion ausgestattet. Durch die Anlernfunktion können weitere Fahrtrichtungsanzeigeeinrichtungen, welche an dem jeweiligen Fahrrad verbaut sind, miteinander verknüpft werden, bspw. die Fahrtrichtungsanzeigeeinrichtung eines Anhängers, der an das Fahrrad angehängt ist.

Die erfindungsgemäße Fahrtrichtungsanzeigeeinrichtung weist eine Bedieneinheit 8 auf, die von Mitteln 9 zum Betätigen gebildet ist, welche außen am Gehäuse 1 angeordnet sind. Die Mittel 9 zum Betätigen können verschieden ausgebildet sein.

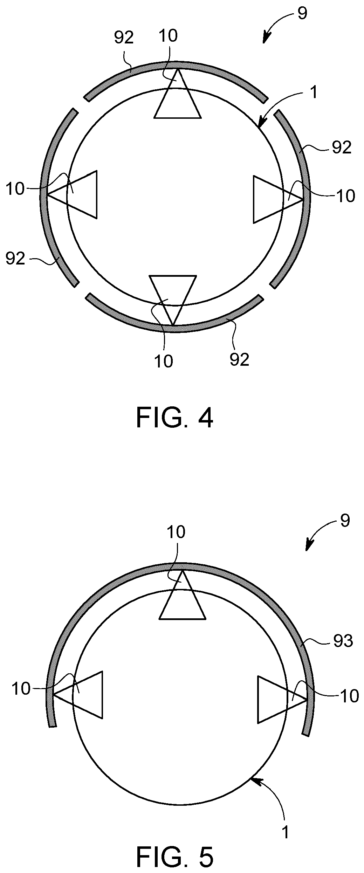

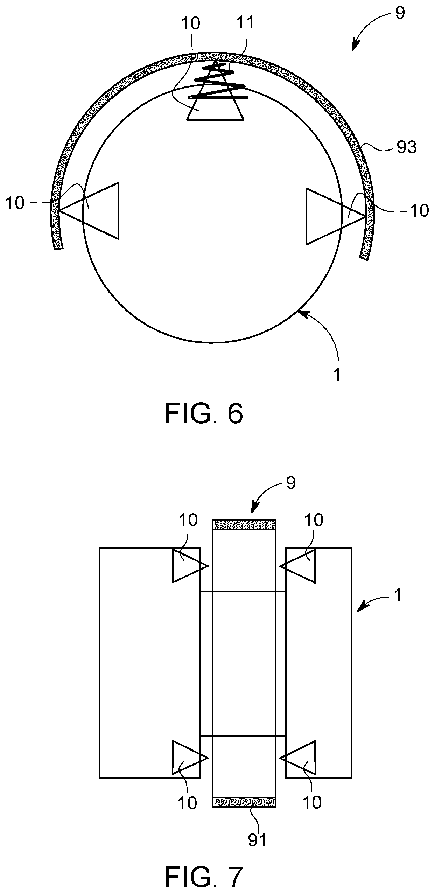

In einer ersten Ausführung, wie sie in Figur 3 schematisch dargestellt ist, sind die Mittel 9 zum Betätigen von einem Ring 91 gebildet sind, der das Gehäuse 1 umgibt. Im Ausführungsbeispiel nach Figur 4 sind die Mittel 9 zum Betätigen dagegen von vier Ringsegmenten 92 gebildet, die das Gehäuse 1 umgeben. In den Ausführungsbeispielen nach den Figur 5 und 6 sind die Mittel 9 zum Betätigen von einem Ringsegment 93 gebildet, welches das Gehäuse 1 lediglich bereichsweise umgibt.

Die Mittel 9 zum Betätigen korrespondieren jeweils mit mindestens einem Sensor 10. Die Sensoren 10 sind derart gestaltet, dass sie im Falle einer Kontaktierung mit einem Ring 91 oder Ringsegment 92, 93 ein Signal zur Steuereinheit 7 aussenden, welches dann für ein Ein- oder Ausschalten der jeweiligen Leuchteinheit 3 Sorge trägt. Die Kontaktierung mit den Sensoren 10 erfolgt bei diesen Ausführungen durch eine radiale Bewegung des Rings 91 bzw. der Ringsegmente 92, 93.

Im Ausführungsbeispiel nach Figur 6 wirken die Mittel 9 zum Betätigen mit einem Rückstellelement 11 zusammen. Im Ausführungsbeispiel handelt es sich bei dem Rückstellelement 11 um eine Feder, die bspw. nach der Betätigung des Ringsegments 93 dieses wieder in seine Ausgangsposition zurückführt.

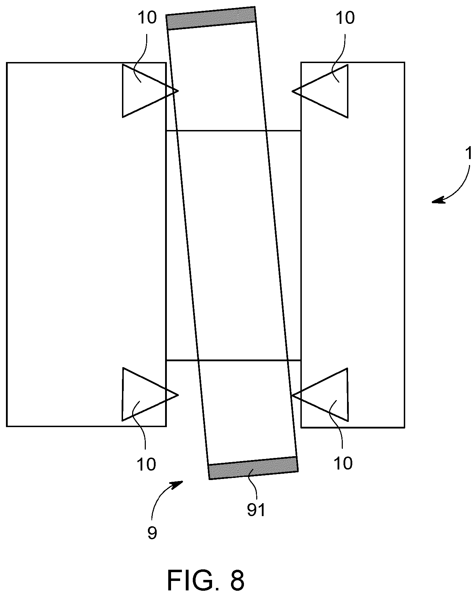

Im Ausführungsbeispiel nach den Figuren 7 und 8 sind die Mittel 9 zum Betätigen auf dem Gehäuse 1 schwimmend gelagert. Eine schwimmende Lagerung im Sinne der vorliegenden Erfindung bedeutet, dass die Mittel 9 zum Betätigen in Form des geschlossenen Rings 91 ausgeführt sind und dieser ein axiales Spiel aufweist. Die Sensoren 10 sind bei dieser Ausführung axial ausgerichtet und werden durch eine axiale Bewegung des Rings 91 kontaktiert.

Bei der erfindungsgemäßen Fahrtrichtungsanzeigeeinrichtung ist das Bedienelement 8 mit seinen Mitteln 9 zum Betätigen unmittelbar in der Nähe des Griffs G an der Lenkstange L angeordnet. Folglich kann der Nutzer die Mittel 9 zum Betätigen in einfacher Weise mit dem Handballen erreichen. Es ist nicht erforderlich, die Hand vom Griff zu nehmen.

Das Auslösen der Fahrtrichtungsanzeigeeinrichtung erfolgt durch Betätigen des Rings 91 bzw. der Ringsegmente 92, 93. Dadurch tritt der Ring 91 bzw. die jeweils betätigten Ringsegmente 92, 93 mit mindestens einem Sensor 10 in Kontakt, wodurch ein Signal zur Steuereinheit 7 ausgesandt wird, welche dann für ein Ein- oder Ausschalten der jeweiligen Leuchteinheit 3 Sorge trägt.

Soweit kein Rückstellelement vorgesehen ist, verbleiben der Ring 91 bzw. die jeweils betätigten Ringsegmente 92, 93 in ihrer durch die Betätigung eingenommenen Position. Nach Beendigung des Abbiegevorgangs oder Spurwechsels bringt der Nutzer den Ring 91 bzw. die jeweils betätigten Ringsegmente 92, 93 wieder in ihre Ausgangsposition.

Sind ein oder mehrere Rückstellelemente 10 verbaut, kehrt der Ring 91 bzw. kehren die jeweils betätigten Ringsegmente 92, 93 unmittelbar nach ihrer Betätigung und damit dem Auslösen des Signals wieder in ihre Ausgangsposition zurück. Nach Beendigung des Abbiegevorgangs oder Spurwechsels betätigt der Nutzer den Ring 91 bzw. die jeweils betätigten Ringsegmente 92, 93 erneut, wodurch ein Signal zum Abschalten Leuchteinheit 3 ausgesandt wird. Auch dann kehrt der Ring 91 bzw. kehren die jeweils betätigten Ringsegmente 92, 93 unter dem Einfluss des oder der Rückstellelemente 10 unmittelbar wieder in ihre Ausgangsposition zurück.

Ergänzend kann die erfindungsgemäße Fahrtrichtungsanzeigeeinrichtung mit einer Zeitmesseinrichtung versehen sein. Diese kann bspw. die Dauer einer Fahrtrichtungsanzeige überwachen und so den Vorgang nach einer voreingestellten Dauer selbsttätig abstellen. Alternativ kann auch die Anzahl der Ein- oder Ausschaltvorgänge der jeweiligen Leuchteinheit 3 überwacht werden, so dass nach einer voreingestellten Anzahl der Vorgang selbsttätig abgestellt werden kann.

In Abwandlung der in den Figuren dargestellten Ausführungsbeispiele besteht bei Verwendung der erfindungsgemäßen Fahrtrichtungsanzeigeeinrichtungen an einem mit einem elektrischen Hilfsantrieb versehenen Fahrrad auch die Möglichkeit, diese mit dem Akkumulator des Fahrrads zu verbinden, so dass auf das Vorsehen des Akkumulators 4 bzw. einer Batterie verzichtet werden kann.

Die Erfindung stellt eine gut zu bedienende und gleichzeitig sehr gut sichtbare Fahrtrichtungsanzeigeeinrichtung bereit. Zudem eignet sie sich sehr gut zum Nachrüsten. Das gilt insbesondere für das Ausführungsbeispiel nach Figur 1, bei dem beide Fahrtrichtungsanzeigeeinrichtungen über einen Akkumulator bzw. eine Batterie verfügen. Dadurch ist eine Verkabelung miteinander vermieden, so dass die Fahrtrichtungsanzeigeeinrichtungen lediglich in die Enden der Lenkstange eingebaut werden müssen.

## Patentansprüche

1. Fahrtrichtungsanzeigeeinrichtung für Fahrräder in Form eines Lenkerendenblinkers umfassend ein Gehäuse (1), eine Leuchteinheit (3), eine Bedieneinheit (8) und eine Steuereinheit (7), **dadurch gekennzeichnet, dass** die Bedieneinheit (8) von Mitteln (9) zum Betätigen gebildet ist, welche außen am Gehäuse (1) angeordnet sind.

2. Fahrtrichtungsanzeigeeinrichtung nach Anspruch 1, **dadurch gekennzeichnet, dass** die Mittel(9) zum Betätigen von einem Ring gebildet sind, der das Gehäuse (1) umgibt.

3. Fahrtrichtungsanzeigeeinrichtung nach Anspruch 1, **dadurch gekennzeichnet, dass** die Mittel (9) zum Betätigen von mindestens einem Ringsegment gebildet sind, welches das Gehäuse (1) mindestens bereichsweise umgibt.

4. Fahrtrichtungsanzeigeeinrichtung nach einem der vorgenannten Ansprüche, **dadurch gekennzeichnet, dass** die Mittel (9) zum Betätigen auf dem Gehäuse (1) schwimmend gelagert sind.

5. Fahrtrichtungsanzeigeeinrichtung nach einem der vorgenannten Ansprüche, **dadurch gekennzeichnet, dass** die Mittel (9) zum Betätigen mit mindestens einem Sensor korrespondieren.

6. Fahrtrichtungsanzeigeeinrichtung nach einem der vorgenannten Ansprüche, **dadurch gekennzeichnet, dass** die Mittel (9) zum Betätigen mit mindestens einem Rückstellelement zusammenwirken.

7. Fahrtrichtungsanzeigeeinrichtung nach einem der vorgenannten Ansprüche, **dadurch gekennzeichnet, dass** in dem Gehäuse (1) mindestens ein Akkumulator (4) angeordnet ist.

8. Fahrtrichtungsanzeigeeinrichtung nach einem der vorgenannten Ansprüche, **dadurch gekennzeichnet, dass** in dem Gehäuse (1) mindestens ein Funkmodul angeordnet ist.

9. Fahrtrichtungsanzeigeeinrichtung nach einem der vorgenannten Ansprüche, **dadurch gekennzeichnet, dass** in dem Gehäuse (1) mindestens ein Indikator angeordnet ist.

10. Fahrtrichtungsanzeigeeinrichtung nach einem der vorgenannten Ansprüche, **dadurch gekennzeichnet, dass** die Steuereinheit (7) mit einer Anlernfunktion versehen ist.

11. Fahrtrichtungsanzeigeeinrichtung nach einem der vorgenannten Ansprüche, **dadurch gekennzeichnet, dass** die Steuereinheit (7) mit einer Zeitmesseinrichtung versehen ist.
